# EUROPEAN PATENT APPLICATION

(11) **EP 4 246 534 A1**
(43) Date of publication of application: **20.09.2023**
(21) Application number: 21892434.8
(22) Date of filing: 09.11.2021
(51) Int. Cl.: G21C 9/016

(54) **SYSTEM FOR CONFINING AND COOLING MELT FROM THE CORE OF A NUCLEAR REACTOR**

(30) Priority: 10.11.2020 RU 2020136898
(71) Applicant: Joint Stock Company "Atomenergoproekt", Moscow 107996 (RU); Science and Innovations - Nuclear Industry Scientific Development, Private Enterprise, Moscow 119017 (RU)
(72) Inventor: SIDOROV, Aleksandr Stalevich, Moscow 115612 (RU); SIDOROVA, Nadezhda Vasilievna, Moscow 115612 (RU); DZBANOVSKAYA, Tatyana Yaropolkovna, Moscow 107113 (RU); BADESHKO, Kseniya Konstantinovna, Volgograd 400066 (RU)
(74) Representative: Osmans, Voldemars
(86) International application number: PCT/RU2021/000494
(87) International publication number: WO 2022/103303

(57) **Abstract**

The invention relates to the field of nuclear energy, in particular, to the systems ensuring safety of nuclear power plants (NPPs), and can be used in severe accidents resulting in destruction of the reactor pressure vessel and containment.

The technical result of the claimed invention is to enhance reliability of the corium localizing and cooling system of a nuclear reactor.

The technical result is achieved due to prevention of the corium localizing and cooling system destruction in the junction area between the vessel and the cantilever truss by use of a membrane with bandage plates installed on the drum within the system.

## Description

### Technical field of the invention

The invention relates to the field of nuclear energy, in particular, to the systems ensuring safety of nuclear power plants (NPPs), and can be used in severe accidents resulting in destruction of the reactor pressure vessel and containment.

Accidents with core meltdown that can take place in case of multiple failures of the core cooling systems pose the greatest radiation hazard.

In the course of such accidents the core melt - corium - escapes from the reactor pressure vessel by melting it as well as the core structures, and afterheat remaining in it may break the integrity of the NPP containment - the last barrier in the routes for release of radioactive products to the environment.

In order to prevent this it is required to localize the core melt (corium) escaping from the reactor pressure vessel and provide its continuous cooling up to its complete crystallization. This function is performed by the corium localizing and cooling system of the nuclear reactor which prevents damage to the NPP containment and thus protects the public and the environment against radiation exposure in case of any severe accidents of nuclear reactors.

### Prior art

A corium localizing and cooling system [1] of a nuclear reactor, comprising a guide plate installed under the reactor pressure vessel and resting upon a cantilever truss, a multi-layered vessel installed on embedded parts in the concrete shaft foundation with a flange equipped with thermal protection, and a filler inside the multi-layered vessel consisting of a set of cassettes installed onto each other is known.

This system has low reliability due to the following drawbacks:
- in case of non-axisymmetric escape of the corium from the reactor pressure vessel (lateral melt-through of the pressure vessel) sectoral destruction of the guide plate, the cantilever truss and thermal protections takes place in the reactor pressure vessel under the impact of internal pressure, and the shock wave of gas escaping together with the corium from the reactor pressure vessel propagates inside the multi-layered vessel volume and inside the peripheral volumes located between the multi-layered vessel, the filler and the cantilever truss and impacts the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system;
- in case of falling of the reactor pressure vessel head fragments or falling of the corium remnants from the reactor pressure vessel into the multi-layered vessel at the initial stage of the corium surface cooling with water shock-induced pressure increase takes place and affects the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system.

A corium localizing and cooling system [2] of a nuclear reactor, comprising a guide plate installed under the reactor pressure vessel and resting upon a cantilever truss, a multi-layered vessel installed on embedded parts in the concrete shaft foundation with a flange equipped with thermal protection, and a filler inside the multi-layered vessel consisting of a set of cassettes installed onto each other is known.

This system has low reliability due to the following drawbacks:
- in case of non-axisymmetric escape of the corium from the reactor pressure vessel (lateral melt-through of the pressure vessel) sectoral destruction of the guide plate, the cantilever truss and thermal protections takes place in the reactor pressure vessel under the impact of internal pressure, and the shock wave of gas escaping together with the corium from the reactor pressure vessel propagates inside the multi-layered vessel volume and inside the peripheral volumes located between the multi-layered vessel, the filler and the cantilever truss and impacts the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system;
- in case of falling of the reactor pressure vessel head fragments or falling of the corium remnants from the reactor pressure vessel into the multi-layered vessel at the initial stage of the corium surface cooling with water shock-induced pressure increase takes place and affects the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system.

A corium localizing and cooling system [3] of a nuclear reactor, comprising a guide plate installed under the reactor pressure vessel and resting upon a cantilever truss, a multi-layered vessel installed on embedded parts in the concrete vault foundation with a flange equipped with thermal protection, and a filler inside the multi-layered vessel consisting of a set of cassettes installed onto each other is known.

This system has low reliability due to the following drawbacks:
- in case of non-axisymmetric escape of the corium from the reactor pressure vessel (lateral melt-through of the pressure vessel) sectoral destruction of the guide plate, the cantilever truss and thermal protections takes place in the reactor pressure vessel under the impact of internal pressure, and the shock wave of gas escaping together with the corium from the reactor pressure vessel propagates inside the multi-layered vessel volume and inside the peripheral volumes located between the multi-layered vessel, the filler and the cantilever truss and impacts the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system;
- in case of falling of the reactor pressure vessel head fragments or falling of the corium remnants from the reactor pressure vessel into the multi-layered vessel at the initial stage of the corium surface cooling with water shock-induced pressure increase takes place and affects the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system.

### Disclosure of the invention

The technical result of the claimed invention is to enhance reliability of the corium localizing and cooling system of a nuclear reactor.

The objective which the claimed invention is intended to achieve is to prevent destruction of the corium localizing and cooling system within the junction area between the corium receiving and distributing vessel and the cantilever truss under the conditions on non-axisymmetric corium escape from the reactor pressure vessel and falling of the reactor pressure vessel head fragments into the vessel at the initial stage of the corium cooling with water, and consequently to prevent any unplanned (untimely) ingress of cooling water into the vessel from the reactor shaft in order to provide protection against steam explosions and destructions caused by the shock wave impact.

The set objective is achieved due to the fact that in accordance with the invention the corium localizing and cooling system of a nuclear reactor, comprising a guide plate, a cantilever truss, a vessel with a filler intended for the corium receipt and distribution and equipped with a flange having thermal protection additionally comprises a drum installed on the vessel flange and arranged in the form of a shell with reinforcing ribs located along its periphery and resting upon the cover and the head, having tension elements connecting the drum with the vessel flange via the support flange welded to it, spacing elements installed on the upper surface of the vessel flange, the fixing shell attached to the upper surface of the vessel flange and the external surface of the drum, the plate connecting the upper surface of the vessel flange and the inner surface of the drum, wherein the space between the plate, the fixing shell and thermal protection of the vessel flange is filled with protective concrete, a convex membrane with the upper and lower flanges connected to the upper and lower heat-conducting elements attached to the cantilever truss and the drum, bandage plates installed on the external and internal side of the membrane in such a way so that their upper ends are fastened rigidly to the upper flange of the membrane, and the lower ends are attached to the lower flange of the membrane with the possibility of longitudinal and vertical movement in relation to the lower flange of the membrane.

Presence of the convex membrane installed on the drum between the vessel flange and the lower surface of the cantilever truss in such a way that the convex side is directed outside the vessel boundaries, and in this case external bandage plates with external fasteners providing for the external safety bandage gap are installed along the external surface of the membrane, and internal bandage plates with internal fasteners providing for the internal safety bandage gap are installed along the internal surface of the membrane, and in this case the external and internal bandage plates are rigidly attached to the upper flange on one side with the use of weld joints, and floating coupling to the lower flange is arranged on the other side with the use of external and internal fasteners regulating the external and internal safety bandage gaps, and their movement is restricted with the use of retainers, is an essential feature of the claimed invention. This design allows for independent radial and azimuthal thermal expansions of the cantilever truss, independent movement of the cantilever truss and the vessel under any mechanical shock impacts on the components of the corium localizing and cooling system equipment, axial and radial thermal expansions of the vessel, and consequently to prevent any ingress of cooling water intended for external cooling of the vessel into the vessel due to prevention of destruction within the area between the vessel and the cantilever truss. The bandage plates, in their turn, enable to maintain integrity of the membrane under the impact of any shock wave on the reactor pressure vessel side in case of its destruction and also to maintain integrity of the membrane under the impact of any shock wave generated at the initial stage of the corium surface cooling with water in case of falling of any reactor pressure vessel head fragments or corium remnants into the corium.

Presence of the drum installed on the vessel flange is another essential feature of the claimed invention. The drum is arranged in the form of a shell with reinforcing ribs located along its periphery and resting upon the cover and the head. The drum has tension elements connecting the drum with the vessel flange via the support flange welded to it. Besides, spacing elements providing for the adjusting gap between the drum and the vessel flange and the fixing shell connecting the upper surface of the vessel flange and the external surface of the drum are installed on the upper surface of the vessel flange. A plate connecting the upper surface of the vessel flange and the internal surface of the drum and forming the space where protective concrete is placed is additionally installed on the upper surface of the vessel flange. This enables to maintain leak-tightness of the membrane and to increase its strength due to reduction of the membrane height and, consequently, the impact area of any shock waves caused by steam explosions without the membrane stiffness increase and reduction of its compensatory capacity in case of any multi-directional changes in the position of the cantilever truss and the vessel.

### Brief description of drawings

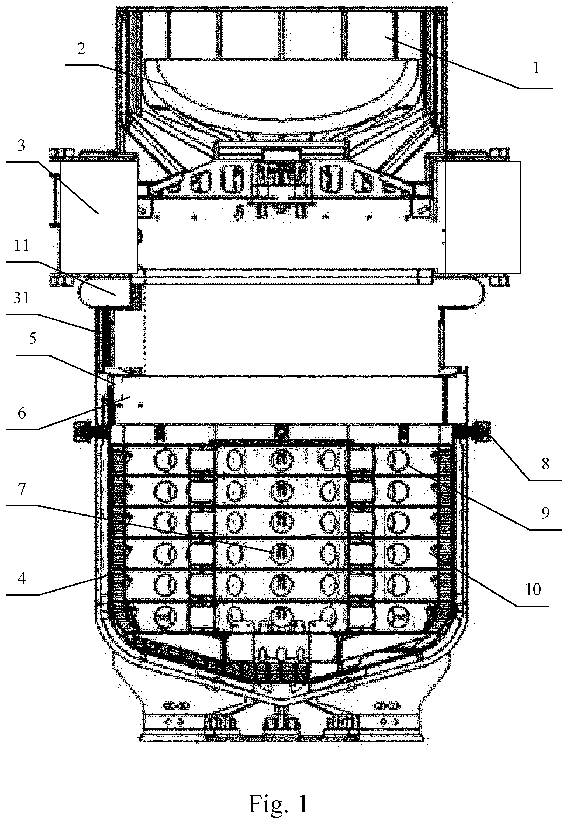

The corium localizing and cooling system of a nuclear reactor arranged in accordance with the claimed invention is shown in Fig. 1.

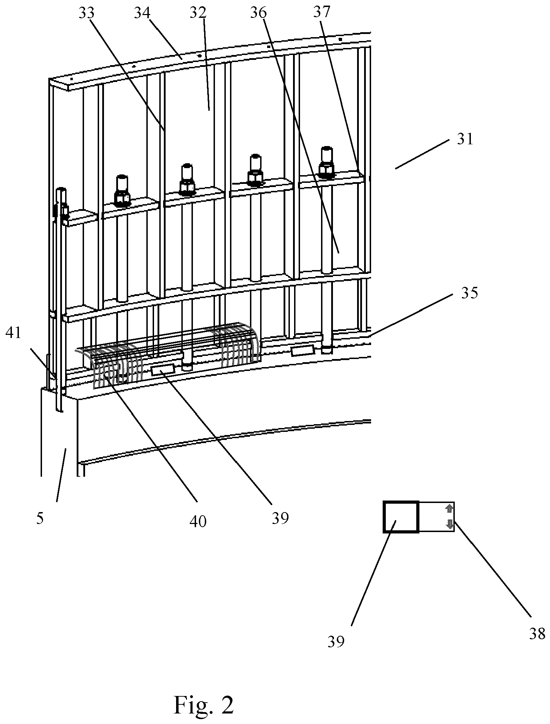

The drum installed on the vessel flange and arranged in accordance with the claimed invention is presented in Fig. 2.

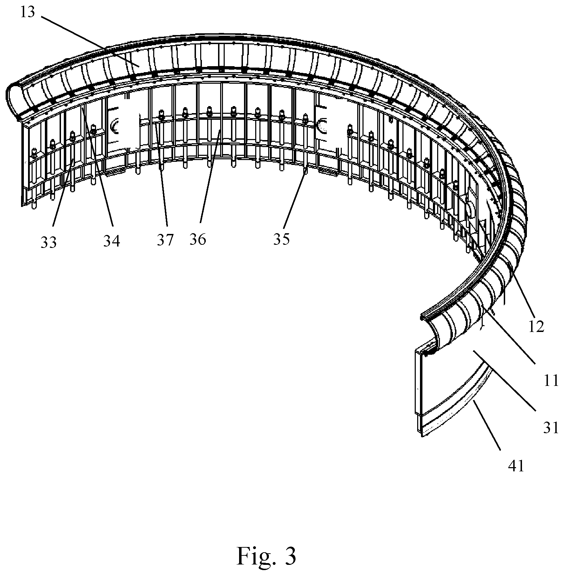

The membrane arranged in accordance with the claimed invention is shown in Fig. 3.

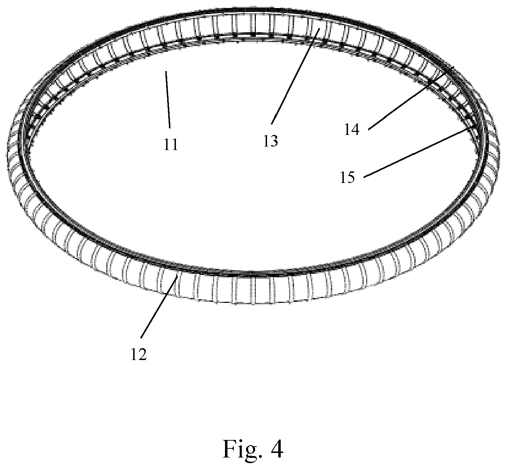

The membrane attachment points with the bandage plates arranged in accordance with the claimed invention are shown in Fig. 4.

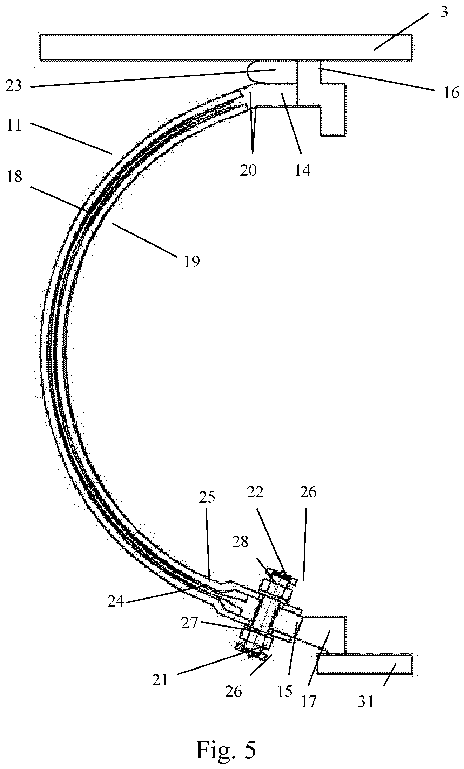

The floating coupling arranged in accordance with the claimed invention is presented in Fig. 5.

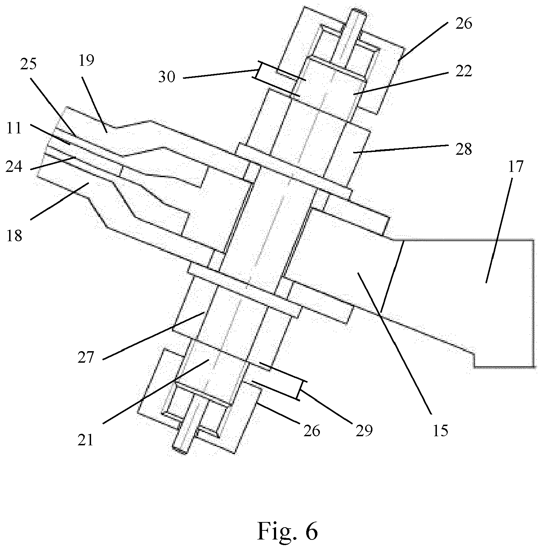

The drum installed on the membrane in accordance with the claimed invention is shown in Fig. 6.

### Embodiments of the invention

As shown in Figs. 1-6, the corium localizing and cooling system of a nuclear reactor comprises the guide plate (1) installed under the nuclear reactor pressure vessel (2). The guide plate (1) rests upon the cantilever truss (3). The vessel (4) installed on embedded parts is located under the cantilever truss (3) in the concrete shaft foundation. The flange (5) of the vessel (4) is equipped with thermal protection (6). The filler (7) intended for the corium receipt and distribution is located inside the vessel (4). For example, the filler (7) may consist of a set of cassettes (10) with various types of apertures (9) arranged in them. Water supply valves (8) installed in branch pipes are located along the vessel (4) periphery in its upper section (within the area between the filler (7) and the flange (5)). As shown in Figs. 1 and 2, the drum (31) arranged in the form of the shell (32) with reinforcing ribs (33) located along its periphery and resting upon the cover (34) and the head (35), with the tension elements (36) connecting the drum (31) with the flange (5) of the vessel (4) via the support flange (37) welded to it is installed on the flange (5) of the vessel (4). Besides, the drum (31) is installed with the adjusting gap (38) in relation to the flange (5) of the vessel (4) with the use of spacing elements (39) and sealed with the use of the fixing shell (41), and voids in the adjusting gap (38) are filled with the protective concrete layer (40).

As shown in Figs. 1-3 and 5, the convex membrane (11) is installed between the drum (31) and the lower surface of the cantilever truss (3). The convex side of the membrane (11) is directed outside the vessel (4) boundaries. A sort of a convective heat exchange pocket (23) with the upper heat-conducting element (16) connected to the upper flange (14) of the membrane (11) is formed in the upper section of the convex membrane (11) within the junction with the lower section of the cantilever truss (3), and the lower heat-conducting element (17) connected to the lower flange (15) of the membrane (11) is arranged in the lower section of the membrane (11).

As shown in Fig. 5, external bandage plates (18) with external fasteners (21) providing for the external safety bandage gap (24) are installed along the external surface of the membrane (11), and internal bandage plates (19) with internal fasteners (22) providing for the internal safety bandage gap (25) are installed along the internal surface of the membrane (11).

The external and internal bandage plates (18), (19) are fastened rigidly to the upper flange (14) of the membrane (11) on one side with the use of weld joints (20), and the floating coupling to the lower flange (15) of the membrane (11) is arranged on the other side with the use of external and internal fasteners (21), (22) regulating the external and internal safety bandage gaps (24), (25), and their movement is restricted with the use of retainers (26).

The claimed corium localizing and cooling system of a nuclear reactor operates as follows.

When the nuclear reactor pressure vessel (2) fails, the corium exposed to hydrostatic pressure of the corium and residual excess pressure of the gas inside the nuclear reactor pressure vessel (2) starts to flow onto the surface of the guide plate (1) held by the cantilever truss (3). The corium flowing down the guide plate (1) enters the vessel (4) and comes into contact with the filler (7). In case of sectoral non-axisymmetric corium flow, sectoral destruction of the guide plate (1) and sectoral destruction of the cantilever truss (3) takes place in the reactor pressure vessel (2) under the impact of increased pressure, and as a result, overpressure in the reactor pressure vessel (2) directly affects the membrane (11) and the drum (31).

As shown in Figs. 3 and 5, the convex membrane (11) installed between the flange (5) of the vessel (4) and the drum (31) provides for sealing of the vessel (4) in order to protect it against flooding with water supplied for its external surface cooling. As shown in Fig. 4, the membrane (11) consists of vertically oriented sectors (12) connected with weld joints (13). The lower flange (15) is arranged in the lower section of the membrane (11), and the upper flange (14) is arranged in the upper section of the membrane (11).

The membrane (11) ensures independent radial and azimuthal thermal expansions of the cantilever truss (3) as well as axial and radial thermal expansions of the vessel (4), provides for independent movements of the cantilever truss (3) and the vessel (4) under any mechanical shock impacts on the components of equipment of the corium localizing and cooling system of the nuclear reactor.

Prior to supply of cooling water to the vessel (4) onto the slag cap and the thin crust formed above the corium surface, the thermal impact on the drum (31) and the membrane (11) on the corium surface side grows. The drum (31) enables to reduce the membrane height which is related to the following processes. In order to ensure leak-tightness of the membrane (11) with rapid increase of the pressure impacting the entire surface of the membrane (11) and under the impact of steam explosions affecting the membrane (11) by sectors, its surface area has to be minimized. With the specified diameter of the membrane (11), reduction of its area is achieved through its height decrease. Nevertheless, decrease of the membrane (11) height is limited by its stiffness increase and reduction of compensatory capacity in case of any multi-directional changes in the position of the cantilever truss (3) and the vessel (4) when the flange (5) of the vessel (4) can move upwards and back in the course of heating/ cooling, the radius of the vessel (4) flange (5) can increase and decrease, and these changes can be non-uniform both along the height and radius in the azimuthal axis direction. The cantilever truss (3) behaves in the same way bending non-uniformly in the azimuthal axis direction and thus even more increasing the axial deviations of the distances between the vessel (4) and the cantilever truss (3) along the azimuthal axis. Deviation of the vessel (4) flange (5) in the radial direction results in shifting of the membrane (11) within the vessel (4) flange (5) plane which in combination with axial deviations of the distances between the vessel (4) and the cantilever truss (3) along the azimuthal axis causes considerable stresses in the membrane (11) limiting its height reduction. Under these conditions the minimum height of the membrane (11) shall be selected in order to ensure resistance of the membrane (11) to rapid pressure increase and steam explosions with due regard for the required compensatory functions in case of any changes in the relative position of the vessel (4) flange (5) and the cantilever truss (3).

As shown in Figs. 2 and 3, the ribs (33) of the drum (31), heated under the impact of thermal radiation, transfer the thermal load to the shell (32) of the drum (31) which transfers thermal energy received from the ribs (33) of the drum (31) and directly from the corium surface to cooling water. The tension elements (36) located between the ribs (33) of the drum (31) provide for shielding of the drum (31) shell (32) against the thermal radiation impact redirecting it to the drum (31) ribs (33) and shell (32) due to secondary re-radiation and thus reducing the maximum local thermal loads on the drum (31) shell (32) associated with spatial non-uniformity of the thermal radiation on the corium surface side and axial non-uniformity of the drum (31) shell (32) cooling with different position of the vessel (4) cooling water level.

Additional heating of the guide plate (1) and the reactor pressure vessel (2) head with the corium remnants supported by it takes place within the same period. Subsequent to start of the cooling water supply into the vessel (4) onto the crust on the corium surface the membrane (11) continues to perform its functions for sealing of the internal space of the vessel (4) and separation of the internal and external media. In the mode of stable water cooling of the external vessel (4) surface the membrane (11) does not get destroyed due to cooling with water or steam-water mixture on the outer side. However, the state of the reactor pressure vessel (2) head and the small quantity of corium inside it can change that can result in falling of the reactor pressure vessel (2) head fragments with the corium remnants into the vessel (4) causing dynamic impact of the corium on thermal protection (6) of the vessel (4) flange (5) and leading to pressure increase due to interaction of the corium with water. Interaction of the corium with water is possible under the conditions when a firm crust on the corium surface has not formed yet, and the corium remnants are present on the reactor pressure vessel (2) head that is possible only within a short period of time in the absence of almost any water on the surface of the slag cap covering the surface of the thin crust above the corium surface at the very beginning of the corium surface cooling with water. Under these conditions all water supplied onto the slag cap from the top evaporates and cools the structures located above. When accumulation of water on the slag cap begins, i.e. the water flow rate for evaporation starts to lag behind the water supply to the vessel (4), the crust on the corium surface begins to grow rapidly. The crust growth is non-uniform: the thickest crust is formed near the inner surface of the vessel (4), and a thin crust is formed on the corium surface in the central part of the vessel (4).

The external and internal bandage plates (18), (19) installed on the external and internal side of the membrane (11) and ensuring fixed changes of the geometrical characteristics of the membrane (11) within the limits of the external and internal safety bandage gaps (24), (25) are used in order to protect the membrane (11) against destruction in case of pressure increase inside the vessel (4). As the shock wave in case of pressure increase propagates asymmetrically in relation to the vessel (4) axis, the impact of the shock wave on the membrane (11) will comprise both forward and backward pressure waves confronted by the external and internal bandage plates (18), (19) respectively. The external and internal bandage plates (18), (19) are located symmetrically on each side of the membrane (11) and prevent development of any oscillatory processes and resonance phenomena in the membrane (11) for considerable reduction of antinode in the membrane (11) under the impact of forward and backward pressure waves.

Upward direction is a peculiarity of the shock wave movement. Under these conditions the lower flange (15) of the membrane (11), the lower section of the membrane (11) and the lower sections of the external and internal bandage plates (18), (19) take up the shock load first. Deformation of the membrane (11) increases in the upward direction. The upper ends of the external and internal bandage plates (18), (19) are fastened rigidly (for example, with weld joints (20)) to the upper flange (14) of the membrane (11) with the fixed external and internal safety gaps (24), (25) providing for reduction of the membrane (11) deformation amplitude in the course of the upward shock wave movement in order to prevent destruction of the membrane (11).

At the same time, the drum (31) located below the membrane (11) takes up the shock loads together with the membrane (11). The shock wave propagating upwards affects mainly the middle and upper sections of the drum (31) due to its design peculiarities. The drum (31) is arranged in the form of a complex regular structure. The surfaces of the shells (32) and the ribs (33) of the drum (31) are vertical and located perpendicular to each other. The surfaces of the tension elements (36) are parallel to the surfaces of the drum (31) shells (32) and ribs (33). The surfaces of the drum (31) cover (34), the head (35) and the support flange (37) are perpendicular to the surfaces of the shells (32), the ribs (33) and the tension elements (36). This position of the structural components provides for partial absorption of the shock wave energy in the drum (31) as well as its partial reflection in order to redistribute the shock wave energy absorption among the components of the drum (31) and the components of the cantilever truss (3) and the guide plate (1). Radial and azimuthal oscillations of the drum (31) shell (32) occur in the drum (31) under the impact of a non-axisymmetric shock wave, and the majority of their energy is damped by the tension elements (36).

The shock wave is partially reflected from the middle and upper sections of the drum (31) to the inner part of the vessel (4) and gets partially split into several waves moving in different directions and impacting the cantilever truss (3) and the guide plate (1) thus resulting in reduction of the shock wave impact on the membrane (11). The shock wave impact on the cover (34) and support flange (37) of the drum (31) located horizontally results in reflection of the shock wave mainly downwards to thermal protection (6) of the vessel (4) flange (5) which also reduces the shock wave impact on the membrane (11). The area of the drum (31) fastening to the flange (5) is poured with protective concrete (40) fixing the shell (41) and the tension elements (36), as shown in Fig. 2, in order to reduce the shock wave impact on the junction area between the drum (31) and the vessel (4) flange (5), i.e. to protect the tension elements (36) and the fixing shell (41) against destruction.

Upon the corium entry to the filler (7) the vessel (4) is heated gradually putting compression pressure on the membrane (11). Axial and radial movement of the membrane (11) independent from the movement of the external and internal bandage plates (18), (19) shall be ensured so that the membrane (11) could perform its compensatory functions. The requirement for independence of movements is associated with considerable difference in stiffness of the membrane (11) and the external and internal bandage plates (18), (19) due to the necessity for the membrane (11) protection against the impact of shock waves. Practical independence of movements is achieved by installation of the external and internal fasteners (21), (22) providing for free movement of the external and internal bandage plates (18), (19) on the lower flange (15) of the membrane (11) with the external and internal safety bandage gaps (24), (25) as shown in Figs. 5 and 6.

In the course of the transportation and handling operations the external and internal bandage plates (18), (19) are fixed rigidly with the use of external and internal adjusting nuts (27), (28) in order to prevent any damage of the membrane (11), and during installation into the design position the external and internal adjusting nuts (27), (28) are unscrewed all the way to the retainers (26). In this case the external and internal adjusting gaps (29), (30) providing for free upward movement of the membrane (11) during thermal expansions of the vessel (4) due to sliding of the external and internal bandage plates (18), (19) along the lower flange (15) of the membrane (11) are formed as shown in Figs. 5 and 6.

Reliable fastening of the membrane (11) to the cantilever truss (3) and the vessel (4) shall be ensured under the impact of shock waves on the membrane (11). For this purpose, the upper flange (14) of the membrane (11) is installed on the upper heat-conducting element (16) fastened to the cantilever truss (3) forming a sort of a pocket (23) together with the upper flange (14) of the membrane (11) and the upper heat-conducting element (16) which provides for efficient heat exchange with the external medium (cooling water or steam-water mixture). As shown in Fig. 5, the pocket (23) for convective heat exchange is required to protect the upper flange (14) of the membrane (11) and the upper heat-conducting element (16) against overheating prior to commencement of the corium surface cooling thus enabling to maintain the strength characteristics of these components for resistance to shock loads.

Heat removal in the lower section of the membrane (11) is arranged from the lower flange (15) and the lower heat-conducting element (17) providing for heat removal from the internal fasteners (22) of the internal bandage plates (19).

Thus, usage of the membrane with bandage plates within the corium localizing and cooling system of a nuclear reactor enabled to ensure leak-tightness of the vessel for protection against flooding with the water supplied for the external vessel surface cooling, independent radial and azimuthal thermal expansions of the cantilever truss, independent movements of the cantilever truss and the vessel under any seismic and shock-induced mechanical impacts on the components of the corium localizing and cooling system equipment, and usage of the drum enabled to provide additional heat removal and additional protection of the membrane against the shock wave impacts in case of the steam-gas mixture pressure increase in the inner space of the vessel, i.e. to enhance reliability of the leak-tight joint between the vessel and the cantilever truss that in the aggregate enabled to enhance reliability of the entire system.

Sources of information:
1. Russian Patent No. 2576517, IPC G21C 9/016, priority dated 16.12.2014;
2. Russian Patent No. 2576516, IPC G21C 9/016, priority dated 16.12.2014;
2. Russian Patent No. 2575878, IPC G21C 9/016, priority dated 16.12.2014.

## Claims

1. A corium localizing and cooling system of a nuclear reactor, comprising a guide plate, a cantilever truss, a vessel with a filler intended for the corium receipt and distribution and having a flange equipped with thermal protection, **characterized in that** it additionally comprises a drum installed on the vessel flange and arranged in the form of a shell with reinforcing ribs located along its periphery and resting upon the cover and the head, having tension elements connecting the drum to the vessel flange via a support flange welded to it, spacing elements installed on the upper surface of the vessel flange, a fixing shell attached to the upper surface of the vessel flange and the external surface of the drum, a plate connecting the upper surface of the vessel flange and the internal surface of the drum, wherein the space between the plate, the fixing shell and thermal protection of the vessel flange is filled with protective concrete, a convex membrane with the upper and lower flanges connected to the upper and lower heat-conducting elements attached to the cantilever truss and the drum, bandage plates installed on the external and internal side of the membrane in such a way so that their upper ends are rigidly fastened to the upper flange of the membrane, and their lower ends are fastened to the lower flange of the membrane with the possibility for longitudinal and vertical movement in relation to the lower flange of the membrane.
